# EUROPEAN PATENT APPLICATION

(11) **EP 4 660 438 A1**
(43) Date of publication of application: **10.12.2025**
(21) Application number: 25181367.1
(22) Date of filing: 06.06.2025
(51) Int. Cl.: F02C 7/232, F02C 7/264, F02C 9/26, F02C 9/28

(54) **SYSTEMS AND METHODS FOR STARTING AN AIRCRAFT ENGINE IN COLD CONDITIONS**

(30) Priority: 06.06.2024 US 202418735407
(71) Applicant: PRATT & WHITNEY CANADA CORP., Longueuil, Québec J4G 1A1 (CA)
(72) Inventor: SAINTIGNAN, Cedric, (01BE5) Longueuil, J4G 1A1 (CA); MOKHTAR, Hytham, (01BE5) Longueuil, J4G 1A1 (CA)
(74) Representative: Dehns

(57) **Abstract**

A fuel system (12), has: a fuel source (S); a fuel pump (30) connected to the fuel source (S); a metering valve (40) connected to the fuel pump (30) and defining a valve opening (43A) having an area being variable, the metering valve (40) having: an ignition configuration in which the area of the valve opening (43A) corresponds to an ignition area sized to regulate a flow rate through the metering valve (40) to a minimum ignition flow rate, and an ice-shedding configuration in which the area of the valve opening (43A) corresponds to an ice-shedding area being greater than the ignition area; and a controller (100) configured to: configure the metering valve (40) in the ice-shedding configuration to allow the flow rate through the metering valve (40) to be greater than the minimum ignition flow rate to permit ice particles (P0) to flow through the valve opening (43A); and configure the metering valve (40) in the ignition configuration to restrict the flow rate through the metering valve (40).

## Description

### TECHNICAL FIELD

The application relates generally to fuel systems and, more particularly, to systems and methods for starting an aircraft engine in cold conditions.

### BACKGROUND

Aircraft engines have fuel delivery systems for flowing fuel from fuel tanks to nozzles of combustors. Fuel delivery systems are expected to operate in a wide variety of operating conditions, including cold soak where the engines are at temperatures below freezing. While existing fuel delivery systems are satisfactory to some extend, there is always a need for improvement.

### SUMMARY

In one aspect, a fuel system for an aircraft engine, comprising: a fuel source; a fuel pump fluidly connected to the fuel source and located downstream of the fuel source relative to a fuel flow; a metering valve fluidly connected to the fuel pump via a fuel line, the metering valve defining a valve opening, an area of the valve opening being variable, the metering valve having: an ignition configuration in which the area of the valve opening corresponds to an ignition area sized to regulate a flow rate through the metering valve to a minimum ignition flow rate required for starting the aircraft engine, and an ice-shedding configuration in which the area of the valve opening corresponds to an ice-shedding area being greater than the ignition area; and a controller operatively connected to the metering valve, the controller having a processing unit operatively connected to a computer-readable medium having instructions stored thereon executable by the processing unit to, during starting of the aircraft engine: configure the metering valve in the ice-shedding configuration to allow the flow rate through the metering valve to be greater than the minimum ignition flow rate to permit ice particles to flow through the valve opening; and configure the metering valve in the ignition configuration to restrict the flow rate through the metering valve to the minimum ignition flow rate.

The fuel system described above may include any of the following features, in any combinations.

In some embodiments, the metering valve further has a filling configuration in which the area of the valve opening corresponds to a filling area being greater than the ignition area and smaller than the ice-shedding area, the filling area sized to regulate the flow rate through the metering valve in the filling configuration to a filling flow rate required for filling the fuel system with the fuel.

In some embodiments, a sensor is operatively connected to the controller, the computer-readable medium including instructions executable by the processing unit to: receive a signal from the sensor, the signal indicative of a temperature of the fuel; and configure the metering valve in the ice-shedding configuration when the temperature is below a freezing point of water.

In some embodiments, the ice-shedding area of the valve opening corresponds to a maximum area of the valve opening of the metering valve.

In some embodiments, the computer-readable medium includes instructions executable by the processing unit to: after the configuration of the metering valve in the ignition configuration, temporarily increase the area of the valve opening above the ignition area.

In some embodiments, the computer-readable medium includes instructions executable by the processing unit to temporarily increase the area of the valve opening by temporarily increasing the area of the valve opening at least two times after the configuration of the metering valve in the ignition configuration.

In some embodiments, the metering valve includes a housing and a valve body movable within the housing, the housing and the valve body conjointly defining the valve opening, the valve opening having a shape that flares in a downstream direction.

In another aspect, there is provided a method of mitigating effects of water in a fuel tank during starting of an aircraft engine having a fuel system including a metering valve fluidly connecting a fuel source to a manifold, the method comprising: determining that a temperature of fuel in the fuel system is below a threshold at which the water forms ice particles in the fuel system; and preventing the ice particles from accumulating at a valve opening of the metering valve by increasing an area of the valve opening beyond an ignition area sized to regulate a flow rate through the metering valve to a minimum ignition flow rate required for starting the aircraft engine.

The method described above may include any of the following features, in any combinations.

In some embodiments, the increasing of the area of the valve opening beyond the ignition area includes increasing the area of the valve opening beyond a filling area of the metering valve sized to regulate the flow rate through the metering valve to a filling flow rate required for filling the fuel system with the fuel.

In some embodiments, the determining that the temperature of the fuel is below the threshold includes receiving a signal from a sensor, the signal indicative of the temperature of the fuel.

In some embodiments, the increasing of the area of the valve opening beyond the ignition area includes increasing the area of the valve to a maximum area of the valve.

In some embodiments, the method includes restricting the flow through the metering valve, and, after the restricting of the flow, temporarily increasing the area of the valve opening above the ignition area.

In some embodiments, the temporarily increasing of the area of the valve includes temporarily increasing the area of the valve opening at least two times after the restricting of the flow through the metering valve.

In yet another aspect, there is provided a method of starting an aircraft engine having a fuel system including a metering valve fluidly connecting a fuel source to a manifold, the method comprising: configuring the metering valve in an ice-shedding configuration to allow a flow rate through the metering valve to be greater than an ignition flow rate required to start the aircraft engine; and configuring the metering valve in an ignition configuration to restrict the flow rate through the metering valve to the ignition flow rate.

The method described above may include any of the following features, in any combinations.

In some embodiments, the metering valve further has a filling configuration in which an area of the valve opening corresponds to a filling area being greater than an ignition area and smaller than ice-shedding area, the filling area sized to regulate the flow rate through the metering valve to a filling flow rate required for filling the fuel system with the fuel.

In some embodiments, the method includes: receiving a signal from a sensor, the signal indicative of a temperature of the fuel; and configuring the metering valve in the ice-shedding configuration when the temperature is below a freezing point of water.

In some embodiments, the configuring of the metering valve in the ice-shedding configuration includes fully opening the valve to a maximum.

In some embodiments, after the configuring of the metering valve in the ignition configuration, temporarily increasing an area of the valve opening above an ignition area.

In some embodiments, the temporarily increasing of the area of the valve opening includes temporarily increasing the area of the valve opening at least two times after the configuration of the metering valve in the ignition configuration.

In some embodiments, the metering valve includes a housing and a valve body movable within the housing, the housing and the valve body conjointly defining the valve opening, the valve opening having a shape that flares in a downstream direction.

### DESCRIPTION OF THE DRAWINGS

Reference is now made to the accompanying figures in which:
Fig. 1 is a schematic side view of an aircraft engine having a fuel system including a fuel metering unit (FMU);
Fig. 2 is a schematic view of the fuel system of the aircraft engine of Fig. 1;
Fig. 3A is a schematic view of a metering valve shown in a first position;
Fig. 3B is a schematic view of the metering valve shown in a second position;
Fig. 4 is a graph illustrating a commanded fuel flow as function of time during a starting sequence of the aircraft engine of Fig. 1;
Fig. 5 is a flowchart illustrating steps of a method of mitigating presence of ice in fuel fed to the aircraft engine of Fig. 1;
Fig. 6 is a flowchart illustrating steps of a method of starting the aircraft engine of Fig. 1; and
Fig. 7 is a schematic representation of a controller.

### DETAILED DESCRIPTION

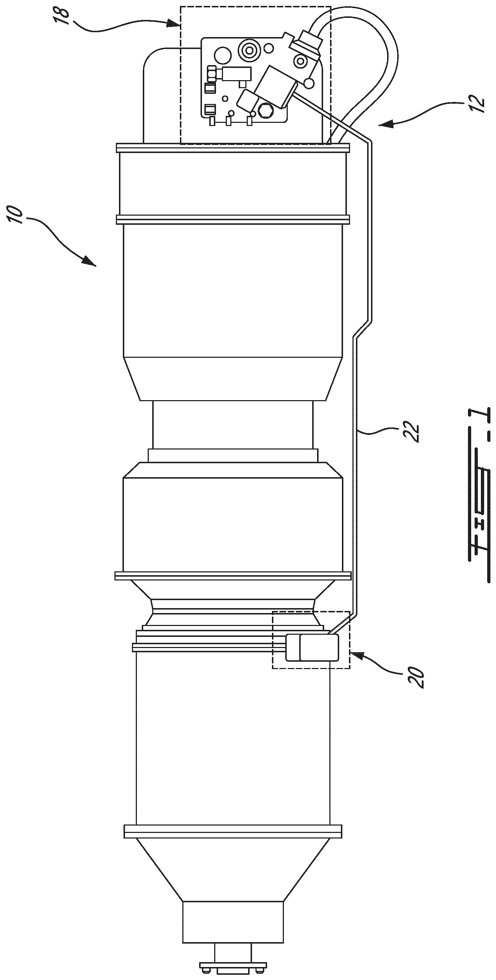

Fig. 1 illustrates an aircraft engine 10 comprising a fuel system 12 having fuel supply and ecology functions. According to some embodiments, the aircraft engine 10 is provided in the form of a gas turbine engine configured for use in subsonic flight, and generally comprising a compressor section for pressurizing the air, a combustor in which the compressed air is mixed with fuel and ignited for generating an annular stream of hot combustion gases, and a turbine section for extracting energy from the combustion gases. However, it is understood that the aircraft engine 10 can adopt various forms and is, thus, not strictly limited to gas turbine engines. For instance, the aircraft engine 10 could be provided in the form of a hybrid electric aircraft engine or a compounded engine including an internal combustion engine compounding power with a gas turbine engine.

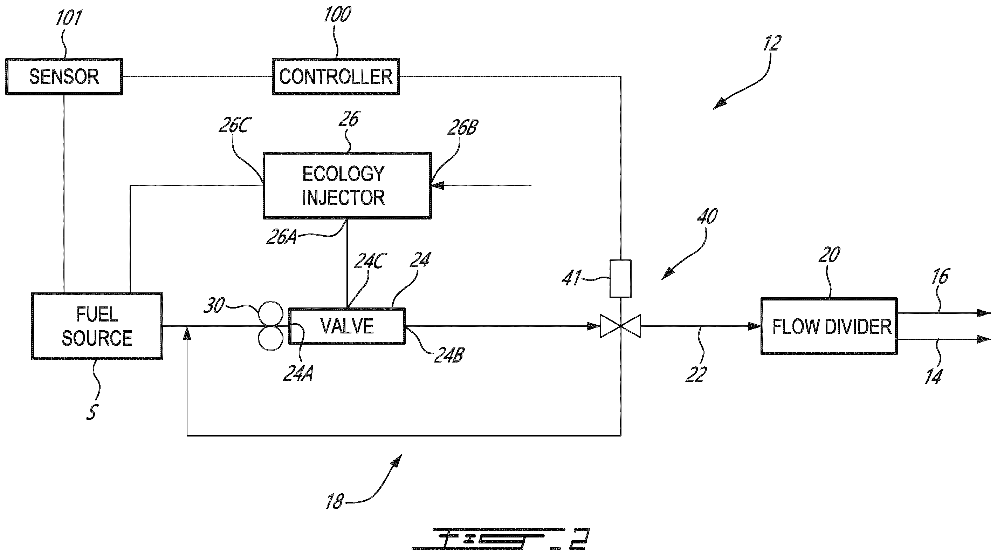

Referring to Fig. 2, the fuel system 12 of the aircraft engine 10 generally comprises a fuel metering unit (FMU) 18 fluidly connected to a flow divider valve 20 configured to split the fuel flow from the FMU 18 between a primary and a secondary fuel manifold 14, 16 when two manifolds are used. The flow divider valve 20 may be omitted if only one fuel manifold is used. In some cases, more than two fuel manifolds are used. As will be seen hereinafter, the FMU 18 and the flow divider valve 20 cooperate to sequence and schedule the fuel flow between the primary and secondary fuel manifolds 14, 16. In some embodiments, the flow divider valve may be omitted even when more than one manifold are used. Check valves may be used at the fuel nozzle tips. The term "fluidly connected" as used herein is intended to mean either an indirect or a direct fluid communication. Thus, if a first device fluidly connects to a second device, that connection may be through a direct connection or through an indirect connection via other devices and connections.

According to the illustrated embodiment, the FMU 18 and the flow divider valve 20 are two separate units installed at remote locations along the aircraft engine 10. As exemplified in Fig. 1, the FMU 18 can be installed at the rear end of the aircraft engine 10, whereas the flow divider valve 20 may be disposed adjacent the fuel manifolds 14,16 in the combustor section of the aircraft engine 10. The FMU 18 is fluidly connected to the flow divider valve 20 via a fuel line 22. As will be seen hereinafter, the fuel line 22 is used to both supply fuel to the fuel manifolds 14, 16 during engine operation and to withdraw fuel from the fuel manifolds 14, 16 at engine shutdown. However, in some other embodiments, a dedicated line, separated from the fuel line 22, may be used to withdraw fuel from the manifolds 14, 16 at engine shutdown. As exemplified in Fig. 1, the fuel line 22 may be provided in the form of an external line extending along a length of the aircraft engine 10 between the FMU 18 and the flow divider valve 20. It is understood that the fuel line 22 can include various components, such as conduit sections, pipes, hoses, fittings, connectors, etc., for carrying a fuel flow from one location to another. In embodiments where no flow divider valve is used, the fuel line extends all the way to the manifold(s).

The FMU 18 comprises a discharge pressurizing valve 24 and an ecology ejector 26. According to some embodiments, the discharge pressurizing valve 24 is embodied in the form of a 3-way, 2-position directional control valve having a pressure or inlet port 24A, an inlet/outlet port 24B and an ecology outlet port 24C. The inlet port 24A is fluidly connected to a fuel source S, such as the engine fuel tank via one or more fuel pumps 30. The inlet/outlet port 24B is, in turn, fluidly connected to the fluid line 22. And the ecology port 24C is fluidly connected to a suction inlet port 26A of the ecology ejector 26.

The discharge pressurizing valve 24 has a fuel supply mode configuration and an ecology mode configuration each associated with a respective position of a valve body of the discharge pressurizing valve 24. In the fuel supply mode, the inlet port 24A is fluidly connected to the inlet/outlet port 24B and the ecology port 24C is disabled/closed. In the ecology mode, the inlet/outlet port 24B is fluidly connected to ecology outlet port 24C and the inlet port 24A is closed.

In addition to the suction inlet port 26A, the ecology ejector 26 has a motive flow inlet 26B fluidly connected to a high pressure motive fluid source (i.e. pressurized fuel) and a discharge or outlet port 26C fluidly connected to the fuel source S, such as the engine main fuel tank. As shown in Fig. 2, following engine shutdown, the motive flow flowing through the motive flow inlet 26B creates a suction at the suction inlet port 26A to draw fuel from the fuel manifolds 14,16, via the flow divider valve 20, the fuel line 22, and the discharge pressurizing valve 24. The fuel manifolds 14, 16 and a portion of the fuel line 22 are thus purged of the fuel.

It will be appreciated that other embodiments of ecology systems may be used in the context of the present disclosure. Any ecology system that, during engine shutdown, empties the fuel manifold(s) to meet the aircraft engine regulation may be used. Hence, the ecology ejector 26 may be replaced by any other suitable means operable to drain the manifold(s).

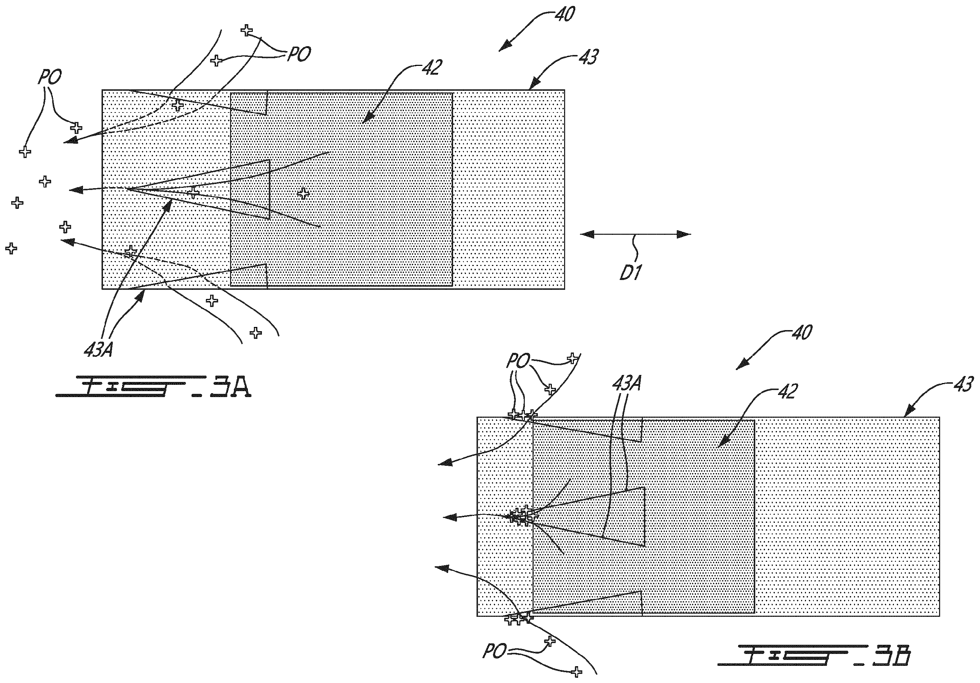

Referring to Figs. 2 and 3A, the fuel metering unit 18 includes a metering valve 40 configured for controlling a fuel flow of fuel supplied to the fuel manifolds 14, 16. In this embodiment, the metering valve 40 is located downstream of the discharge pressurizing valve 24, but it may alternatively be located upstream of the discharge pressurizing valve 24. The metering valve 40 includes an actuator 41 drivingly engaged to a valve body 42 for varying a flow circulating area of the metering valve 40. The actuator 41 may be engaged to the valve body 42 in any suitable ways. For instance, the actuator could impose a fluid pressure differential to the valve body 42 to make it move. In the embodiment shown, the valve body 42 is located within a housing 43, also referred to as a sleeve. The sleeve and the valve body 42 may be encased in an external housing. The valve body 42 is movable within the housing 43. The housing 43 defines one or more opening 43A, which flare in a downstream direction. The shape of the openings 43A is herein triangular, but other shapes are contemplated. The valve body 42 is movable along direction D1, which is parallel to a central axis of the housing 43. The flow circulating area of the metering valve 40 may be varied by varying an overlap between the valve body 42 and the openings 43A of the housing 43. As shown in Fig. 3A, the flow circulating area is greater than in Fig. 3B. The flow is depicted as flowing from radial to axial, but it may alternatively flow in the opposite direction.

The metering valve 40 has a valve opening whose area corresponds to at most an area of the openings 43A of the housing 43. The valve opening may be reduced by increasing an overlap between the valve body 42 and the openings 43A of the housing 43. In the context of the present disclosure, the expression "valve opening" refers to one or more passages of the metering valve 40 via which fuel may flow. The valve opening is defined conjointly by the housing 43 and the valve body 42.

In some cases, water may penetrate the fuel tank and fuel may end up contaminated with water. Over time, water can accumulate in some components of the fuel system 12. During a cold soak, this water can freeze, and the ice may be an issue when starting the aircraft engine in cold conditions. The metering valve 40 may be particularly sensitive to ice accumulation. When starting the engine, the opening of the metering valve 40 is small. During the cold soak start, ice can migrate and accumulate in the valve opening of the metering valve 40, creating a restriction to the fuel, making the start unsuccessful. Ice particles are shown at P0 in Figs. 3A and 3B.

As previously explained, aircraft engines fuel systems typically feature ecology systems that collect the fuel from the fuel manifolds during engine shutdown to meet regulation requirements. To compensate for the fuel removed from the fuel manifolds and fuel lines at shutdown, it is typical to command a "filling function" at the beginning of the engine start sequence. The filling function includes sending in the early phase of engine start sequence a large amount of fuel towards the manifolds to refill the fuel system sections emptied by the ecology system during the previous shutdown, and facilitate engine ignition.

Usually, during starting of the engine, the fuel pump 30 is the limiting component since it is driven by a high-pressure shaft of the engine. Since this shaft rotates slowly at start, the fuel flow it provides may be limited. Thus, the filling function may be designed to not limit the amount of fuel flow commanded to be sent towards the fuel manifolds 14, 16. The commanded flow is therefore meant to exceed the pump capability such that the fuel pump 30 remains the limiting component.

Referring back to Fig. 2, the fuel system 12 includes a controller 100 operatively connected to the metering valve 40. The controller 100 is configured to control the flow circulating area of the metering valve 40. In this embodiment, the controller 100 is operatively connected to the actuator 41 of the metering valve 40 to move the valve body 42 relative to the housing 43 to vary the flow circulating area of a valve opening of the metering valve 40. A sensor 101 may be operatively connected to the fuel system 12, herein to the fuel source S, and configured to generate a signal indicative of a temperature of the fuel of the fuel source (e.g., fuel tank). The sensor 101 may be a temperature sensor located in the fuel tank. The sensor 101 may alternatively be located upstream of the metering valve 40. Alternatively, the sensor 101 may be any sensor able to provide an indication that a temperature of the fuel is below a freezing point of water. For instance, the sensor 101 may be configured to generate a signal indicative of a temperature of an environment outside the aircraft engine. It may be possible to measure air temperature, oil temperature, metal temperature, and so on to determine whether or not there is a risk of presence of ice in the tank.

Referring to Figs. 3A and 3B, the metering valve 40 has a plurality of configurations each associated with a respective flow circulating area. In other words, the area of the valve opening is variable. The metering valve 40 thus has an ignition configuration in which the area of the valve opening corresponds to an ignition area sized to regulate a flow rate through the metering valve to a minimum ignition flow rate required for starting the aircraft engine. The metering valve 40 further has an ice-shedding configuration in which the area of the valve opening corresponds to an ice-shedding area being greater than the ignition area. The ice-shedding area may correspond to a maximum area of the valve opening. Put differently, the ice-shedding area may correspond to a fully open position of the metering valve 40. In some embodiments, the metering valve 40 has a filling configuration in which the area of the valve opening corresponds to a filling area sized to regulate a flow rate through the metering valve to a filling flow rate required for filling the fuel system. The filling area is greater than the ignition area and smaller than ice-shedding area. The filling flow rate corresponds to the flow rate required for filling the fuel system 12 within a given time period with the fuel after the fuel system 12 has been purged of the fuel as explained herein above.

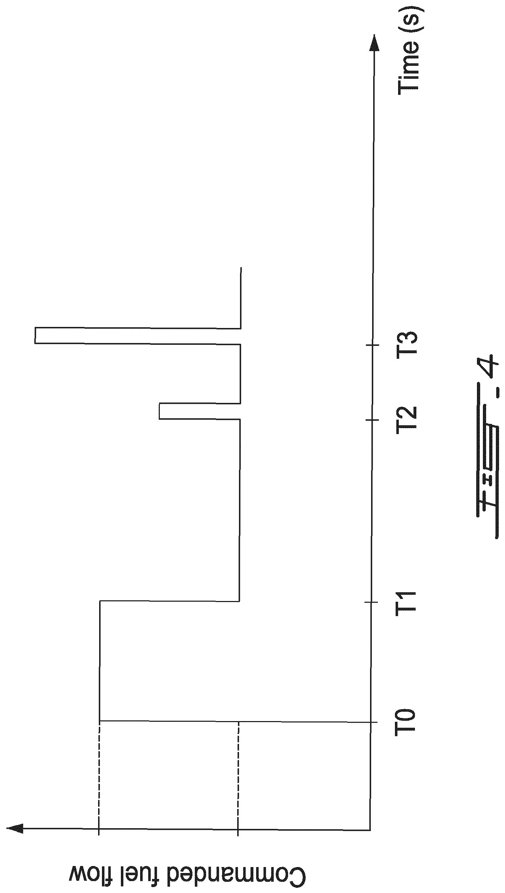

Referring now to Fig. 4, a graph illustrating a variation of a commanded fuel flow as a function of time is shown. The expression "commanded fuel flow" refers to a fuel flow being desired by the fuel system 12. The commanded fuel flow may correspond to a maximum flow rate of the fuel through the metering valve 40 being at a given configuration. For instance, if the metering valve 40 is in the ignition configuration, the maximum flow rate that may flow through the metering valve 40 corresponds to the ignition flow rate. However, during the starting of the aircraft engine, the fuel pump 30 (Fig. 2) is accelerating. Thus, a delay may occur between when the metering valve 40 is configured in a certain configuration and when the flow rate reaches the desired flow rate.

Fig. 4 illustrates an exemplary sequence of operation of the metering valve 40. At time T0, a starting sequence of the aircraft engine is initiated. At that point, the metering valve 40 may be configured in the ice-shedding configuration to allow a flow rate being greater than required to ignite the aircraft engine. This flow rate may be greater than the filling flow rate required for filling or priming the fuel system 12. Because of the large area of the valve opening in the ice-shedding configuration, the ice particles P0 (Figs. 3A-3B) may flow through the metering valve 40 and reach the fuel manifolds 14, 16. The ice particles may subsequently melt because of heat of the aircraft engine. At time T1, the metering valve 40 may be configured in the ignition configuration by decreasing the area of the valve opening to the ignition area. In some cases, one or more short bursts of temporarily increasing the area of the valve opening beyond the ignition area may be used. These are shown at times T2 and T3 in the graph of Fig. 4. The area of the valve opening during these bursts may be any area between a maximum area of the valve opening and the ignition area.

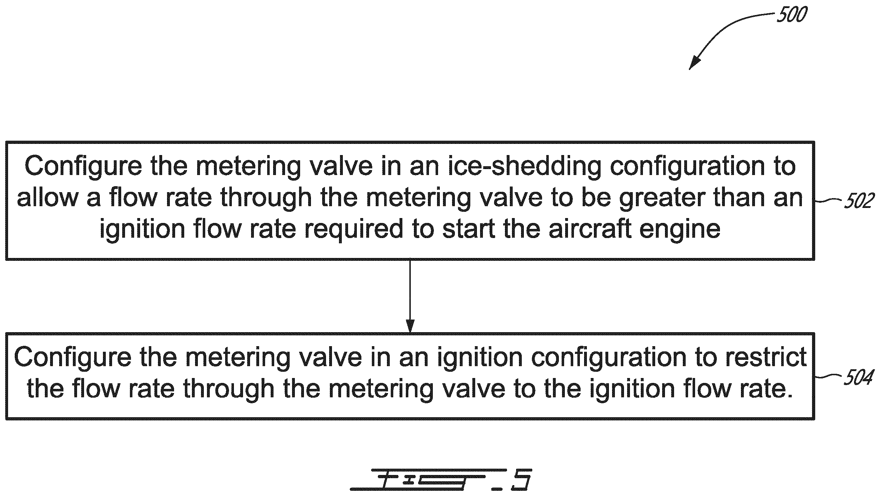

Referring now to Fig. 5, a method of starting the aircraft engine is shown at 500. The method 500 includes configuring the metering valve 40 in the ice-shedding configuration to allow a flow rate through the metering valve 40 to be greater than the minimum ignition flow rate required to start the aircraft engine and to permit the ice particles to flow through the valve opening at 502; and configuring the metering valve 40 in the ignition configuration to restrict the flow rate through the metering valve to the minimum ignition flow rate at 504.

In some embodiments, the method 500 includes receiving a signal from the sensor 101, the signal indicative of a temperature of the fuel; and configuring the metering valve 40 in the ice-shedding configuration when the temperature is close to or below a freezing point of water. Put differently, if it is determined that the temperature of the fuel is not prone to creation of ice particles, it may be possible to skip configuring the metering valve 40 in the ice-shedding configuration.

In some cases, the configuring of the metering valve 40 in the ice-shedding configuration includes fully opening the valve to a maximum. In some embodiments, after the configuring of the metering valve 40 in the ignition configuration, the area of the valve opening may be temporarily increased above the ignition area. This may help in shedding even more ice particles that may have accumulated on the metering valve 40 when the metering valve was configured in the ignition configuration. This step may include temporarily increasing the area of the valve opening at least one time, at least two times in some embodiments, after the configuration of the metering valve in the ignition configuration.

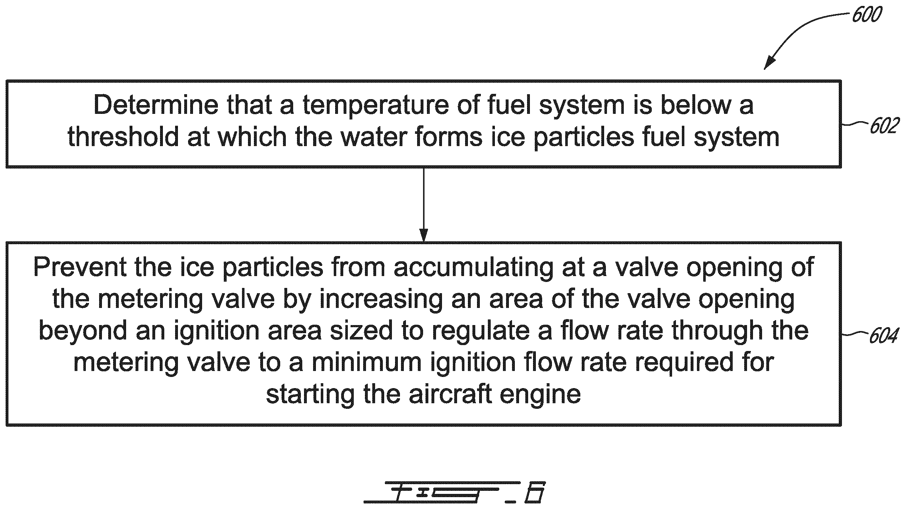

Referring to Fig. 6, a method of mitigating effects of water in the fuel system, is shown at 600. The method 600 includes determining that a temperature of fuel in the fuel system (e.g., fuel tank) is below a threshold at which the water forms ice particles in the fuel tank at 602; and preventing the ice particles from accumulating at the valve opening of the metering valve 40 by increasing the area of the valve opening beyond the ignition area sized to regulate the flow rate through the metering valve to a minimum ignition flow rate required for starting the aircraft engine at 604.

In some embodiments, the increasing of the area of the valve opening beyond the ignition area includes increasing the area of the valve opening beyond the filling area of the metering valve 40 sized to regulate the flow rate through the metering valve 40 to a filling flow rate required for filling the fuel system. In some embodiments, the determining that the temperature of the fuel is below the threshold includes receiving a signal from the sensor 101, the signal indicative of the temperature of the fuel.

In some embodiments, the method 600 includes restricting the flow through the metering valve and, after the restricting of the flow, temporarily increasing the area of the valve opening above the ignition area. The temporarily increasing of the area of the valve may include temporarily increasing the area of the valve opening at least two times after the restricting of the flow through the metering valve. The steps described above with reference to Fig. 5 may be used in the method 600 of Fig. 6.

The present disclosure therefore pertains to a method of using a filling function of the fuel system 12 for shedding the ice. The method includes using the filling function as is or with an increased valve opening at or beyond what would normally be required to fill the fuel system 12 and start the aircraft engine with the intent to release the ice that may have accumulated on the valve opening during a cold soak period, during the cold soak start early phase, or alternatively prevent ice accumulation on the valve opening during a cold soak start.

The valve opening being increased to above what is necessary for start and fuel system filling may allow the ice to be evacuated downstream or not accumulate on the metering valve 40 such that once the filling function is completed and once the normal start flow is commanded (slightly later in a typical engine start flow schedule sequence), there may be a significant reduction in ice that may otherwise cause a restriction of the fuel flow to the manifolds.

A magnitude of the area of the valve opening and a time during which the metering valve 40 is in the ice-shedding configuration are two parameters that may be modified to serve the purpose of evacuating ice or preventing ice from accumulating on the metering valve 40. There could be other parameters of the start flow schedule to play with.

The method may use available engine and or aircraft parameters (e.g., fuel temperature in the tank, in the aircraft fuel system, in the engine fuel system, oil temperature, air temperature, engine acceleration rate, water in fuel detection systems, manual entry from pilots or operators, and so on) to detect and identify environmental conditions that could correspond to cold soaked conditions that could result in failed engine start attempt if no action is taken, and could modify the starting sequence, for instance by using the ice-shedding configuration of the metering valve 40, to release the ice or prevent the ice accumulation in the metering valve 40, and allow for a successful engine start.

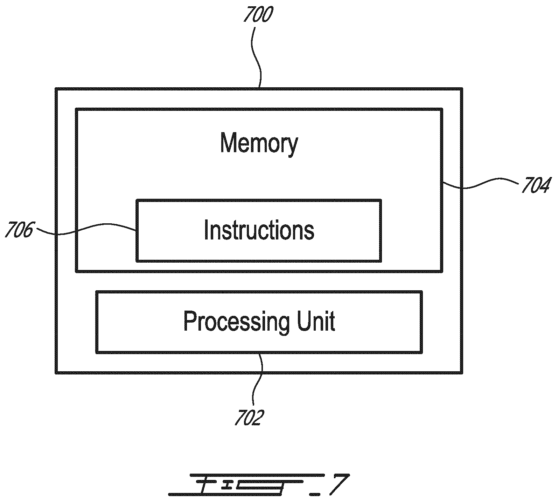

With reference to Fig. 7, an example of a computing device 700 is illustrated. For simplicity only one computing device 700 is shown but the system may include more computing devices 700 operable to exchange data. The computing devices 700 may be the same or different types of devices. The controller 100 may be implemented with one or more computing devices 700. Note that the controller 100 can be implemented as part of a full-authority digital engine controls (FADEC) or other similar device, including electronic engine control (EEC), engine control unit (ECU), electronic propeller control, propeller control unit, and the like. In some embodiments, the controller 100 is implemented as a Flight Data Acquisition Storage and Transmission system, such as a FAST^{™} system. The controller 100 may be implemented in part in the FAST^{™} system and in part in the EEC. Other embodiments may also apply.

The computing device 700 comprises a processing unit 702 and a memory 704 which has stored therein computer-executable instructions 706. The processing unit 702 may comprise any suitable devices configured to implement the methods described herein such that instructions 706, when executed by the computing device 700 or other programmable apparatus, may cause the functions/acts/steps performed as part of the methods described herein to be executed. The processing unit 702 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 704 may comprise any suitable known or other machine-readable storage medium. The memory 704 may comprise non-transitory computer readable storage medium, for example, but not limited to, an electronic, magnetic, optical, electromagnetic, infrared, or semiconductor system, apparatus, or device, or any suitable combination of the foregoing. The memory 704 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 704 may comprise any storage means (e.g., devices) suitable for retrievably storing machine-readable instructions 706 executable by processing unit 702.

The methods and systems described herein may be implemented in a high level procedural or object oriented programming or scripting language, or a combination thereof, to communicate with or assist in the operation of a computer system, for example the computing device 700. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 702 of the computing device 700, to operate in a specific and predefined manner to perform the functions described herein, for example those described in the methods described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A fuel system (12) for an aircraft engine (10), comprising:
a fuel source (S);
a fuel pump (30) fluidly connected to the fuel source (S) and located downstream of the fuel source (S) relative to a fuel flow;
a metering valve (40) fluidly connected to the fuel pump (30) via a fuel line (22), the metering valve (40) defining a valve opening (43A), an area of the valve opening (43A) being variable, the metering valve (40) having:
an ignition configuration in which the area of the valve opening (43A) corresponds to an ignition area sized to regulate a flow rate through the metering valve (40) to a minimum ignition flow rate required for starting the aircraft engine (10), and
an ice-shedding configuration in which the area of the valve opening (43A) corresponds to an ice-shedding area being greater than the ignition area; and
a controller (100) operatively connected to the metering valve (40), the controller (100) having a processing unit (702) operatively connected to a computer-readable medium having instructions (706) stored thereon executable by the processing unit (702) to, during starting of the aircraft engine (10):
configure the metering valve (40) in the ice-shedding configuration to allow the flow rate through the metering valve (40) to be greater than the minimum ignition flow rate to permit ice particles (P0) to flow through the valve opening (43A); and
configure the metering valve (40) in the ignition configuration to restrict the flow rate through the metering valve (40) to the minimum ignition flow rate.

2. The fuel system (12) of claim 1, wherein the metering valve (40) further has a filling configuration in which the area of the valve opening (43A) corresponds to a filling area being greater than the ignition area and smaller than the ice-shedding area, the filling area sized to regulate the flow rate through the metering valve (40) in the filling configuration to a filling flow rate required for filling the fuel system (12) with the fuel.

3. The fuel system (12) of claim 1 or 2, comprising a sensor (101) operatively connected to the controller (100), the computer-readable medium including instructions (706) executable by the processing unit (702) to:
receive a signal from the sensor (101), the signal indicative of a temperature of the fuel; and
configure the metering valve (40) in the ice-shedding configuration when the temperature is below a freezing point of water.

4. The fuel system (12) of any of the preceding claims, wherein the ice-shedding area of the valve opening (43A) corresponds to a maximum area of the valve opening (43A) of the metering valve (40).

5. The fuel system (12) of any of the preceding claims, wherein the computer-readable medium includes instructions (706) executable by the processing unit (702) to:
after the configuration of the metering valve (40) in the ignition configuration, temporarily increase the area of the valve opening (43A) above the ignition area.

6. The fuel system (12) of claim 5, wherein the computer-readable medium includes instructions (706) executable by the processing unit (702) to temporarily increase the area of the valve opening (43A) by temporarily increasing the area of the valve opening (43A) at least two times after the configuration of the metering valve (40) in the ignition configuration.

7. The fuel system (12) of any of the preceding claims, wherein the metering valve (40) includes a housing (43) and a valve body (42) movable within the housing (43), the housing (43) and the valve body (42) conjointly defining the valve opening (43A), the valve opening (43A) having a shape that flares in a downstream direction.

8. A method of mitigating effects of water in a fuel tank during starting of an aircraft engine (10) having a fuel system (12) including a metering valve (40) fluidly connecting a fuel source (S) to a manifold, the method comprising:
determining that a temperature of fuel in the fuel system (12) is below a threshold at which the water forms ice particles (P0) in the fuel system (12); and
preventing the ice particles (P0) from accumulating at a valve opening (43A) of the metering valve (40) by increasing an area of the valve opening (43A) beyond an ignition area sized to regulate a flow rate through the metering valve (40) to a minimum ignition flow rate required for starting the aircraft engine (10).

9. The method of claim 8, wherein the increasing of the area of the valve opening (43A) beyond the ignition area includes increasing the area of the valve opening (43A) beyond a filling area of the metering valve (40) sized to regulate the flow rate through the metering valve (40) to a filling flow rate required for filling the fuel system (12) with the fuel.

10. The method of claim 8 or 9, wherein the determining that the temperature of the fuel is below the threshold includes receiving a signal from a sensor (101), the signal indicative of the temperature of the fuel.

11. The method of any of claims 8 to 10, wherein the increasing of the area of the valve opening (43A) beyond the ignition area includes increasing the area of the valve to a maximum area of the valve.

12. The method of any of claims 8 to 11, comprising restricting the flow through the metering valve (40), and, after the restricting of the flow, temporarily increasing the area of the valve opening (43A) above the ignition area.

13. The method of claim 12, wherein the temporarily increasing of the area of the valve includes temporarily increasing the area of the valve opening (43A) at least two times after the restricting of the flow through the metering valve (40).
